# EUROPÄISCHE PATENTSCHRIFT

(11) **EP 4 110 740 B1**
(45) Veröffentlichungstag und Bekanntmachung des Hinweises auf die Patenterteilung: **31.01.2024**
(21) Anmeldenummer: 21706597.8
(22) Anmeldetag: 23.02.2021
(51) Int. Cl.: C04B 2/12

(54) **VERFAHREN ZUM BRENNEN VON KARBONHALTIGEM MATERIAL IN EINEM GGR-SCHACHTOFEN**
METHOD FOR BURNING CARBON-CONTAINING MATERIAL IN A PFR SHAFT FURNACE
PROCÉDÉ DE COMBUSTION D'UN MATÉRIAU CONTENANT DU CARBONE DANS UN FOUR À CUVE PFR

(30) Priorität: 26.02.2020 DE 102020202481; 26.02.2020 LU 101654; 26.02.2020 CN 202010118637; 26.02.2020 CN 202020210805 U
(43) Veröffentlichungstag der Anmeldung: 04.01.2023
(73) Patentinhaber: Maerz Ofenbau AG, 8002 Zürich (CH); thyssenkrupp AG, 45143 Essen (DE)
(72) Erfinder: PIRINGER, Hannes, 5712 Beinwil am See (CH); BUCHER, Patrick, 5012 Schönenwerd (CH); DIDELON, Fernand, 3286 Bettembourg (LU)
(74) Vertreter: thyssenkrupp Intellectual Property GmbH
(86) Internationale Anmeldenummer: PCT/EP2021/054475
(87) Internationale Veröffentlichungsnummer: WO 2021/170592

(56) Entgegenhaltungen:
- WO-A1-2004/106828
- DE-A1- 3 038 927

## Beschreibung

Die Erfindung betrifft ein Verfahren zum Brennen von karbonhaltigem Material in einem Gleichstrom-Gegenstrom-Regenerativ Schachtofen (GGR-Schachtofen) sowie einen GGR- Schachtofen.

Ein derartiger, beispielsweise aus der WO 2011/072894 A1 bekannter GGR-Schachtofen weist zwei vertikale, parallele Schächte auf, die zyklisch arbeiten, wobei nur in einem Schacht, dem jeweiligen Brennschacht, gebrannt wird, während der andere Schacht als Regenerativschacht arbeitet. Dem Brennschacht werden Oxidationsgas im Gleichstrom mit dem Material und Brennstoff zugeführt, wobei die dabei entstehenden heißen Abgase zusammen mit der von unten zugeführten, erwärmten Kühlluft über den Überstromkanal in den Abgasschacht geleitet werden, wo die Abgase im Gegenstrom zum Material nach oben abgeleitet werden und das Material dabei vorwärmen. Das Material wird üblicherweise von oben zusammen mit dem Oxidationsgas in den Schacht aufgegeben, wobei Brennstoffe in der Brennzone eingedüst werden.

Das zu brennende Material passiert üblicherweise in jedem Schacht eine Vorwärmzone zum Vorwärmen des Materials, eine sich daran anschließende Brennzone, in der das Material gebrannt wird und eine sich daran anschließende Kühlzone, in der Kühlluft dem heißen Material zugeführt wird.

Während eines Zyklus, welcher beispielsweise 10-15 min. dauert, wird das zu brennende Material kontinuierlich über Austragseinrichtungen an beiden Schächten ausgetragen. Die Materialsäule sinkt gleichmäßig in den Schächten ab. Danach wird der Ofen umgesteuert, sodass der Schacht, welcher zuvor als Brennschacht gearbeitet hat, zum Regenerativschacht und der Schacht, der zuvor als Regenerativschacht gearbeitet hat, wiederum zum Brennschacht wird.

Ein solcher GGR-Schachtofen wird beispielsweise mit Brenngasen bis zu einem Heizwert von etwa 3,3 MJ/Nm³ betrieben, wobei Brenngase mit einem Heizwert von weniger als 6,6 MJ/Nm³ erhebliche Nachteile in dem Betrieb des GGR-Schachtofens mit sich bringen. Beispielsweise ist in Brenngasen mit einem Heizwert von weniger als 6.6MJ/Nm³ ein hoher Anteil an nicht brennbaren Bestandteilen vorhanden. Daraus ergibt sich im Betrieb des GGR-Schachtofens eine relativ große Brenngasmenge, welche zusammen mit der Verbrennungs- und Kalkkühlluft eine größere Abgasmenge zur Folge hat. Die größere Abgasmenge enthält einen Wärmeüberschuss welcher vom Kalksteinbett in der Vorwärmzone des GGR- Schachtofens nicht mehr aufgenommen werden kann. Dadurch erhöht sich die Abgastemperatur von ca. 100°C auf ca. 300°C. Die höhere Abgastemperatur und das höhere Abgasvolumen führen zu höheren Wärmeverlusten und deswegen benötigt ein GGR- Schachtofen, welcher nach dem heutigen Stand der Technik ausgeführt ist, wenn er mit Gasen gefeuert wird welche einen Heizwert von nur 3.3 MJ/Nm3 aufweisen, ca. 20% mehr thermische Energie bzw. Brennstoff als ein GGR- Schachtofen welcher mit Erdgas gefeuert wird.

Wegen des höheren Abgasvolumens steigt der Druckverlust eines GGR- Schachtofens, welcher nach dem heutigen Stand der Technik ausgeführt ist, beim Betrieb mit Brenngasen mit einem Heizwert von nur 3.3MJ/Nm3 um ca. 35% im Vergleich zu einem erdgasgefeuertem GGR- Schachtofen. Im gleichen Maße ist ein höherer elektrischer Energiebedarf die Folge um die Brenngase und die Prozessluft zu verdichten.

WO 2004/106828 offenbart ein Verfahren zum Kalzinieren von Kalk in einem Gleichstrom-Gegenstrom-Regenerativ-Schachtofen wobei die Brennstoffzufuhr in die Brennzone erfolgt. Das Brenngas wird in einem Wärmeaustauscher mit Prozessgas des Brennprozesses vorgewärmt. Die Brennstoffzufuhr erfolgt innerhalb der Brennzone.

Aus dem EP 1 634 026 B1 ist ein Verfahren bekannt, welches die oben genannten Nachteile reduziert. Dieses Verfahren hat jedoch den Nachteil, dass es einen großen und teuren Heißgaswärmetauscher benötigt, der sich wegen der hohen Betriebstemperaturen auch mit Staub zusetzen könnte.

Davon ausgehend ist es Aufgabe der vorliegenden Erfindung, ein Verfahren zum Betrieben eines GGR- Schachtofens anzugeben, bei dem die voran genannten Nachteile überwunden werden.

Diese Aufgabe wird erfindungsgemäß durch ein Verfahren mit den Merkmalen des unabhängigen Verfahrensanspruchs 1 und durch eine Vorrichtung mit den Merkmalen des unabhängigen Vorrichtungsanspruchs 9 gelöst. Vorteilhafte Weiterbildungen ergeben sich aus den abhängigen Ansprüchen.

Nach einem ersten Aspekt umfasst die Erfindung ein Verfahren zum Brennen und Kühlen von Material, wie Karbonatgesteinen, in einem Gleichstrom-Gegenstrom-Regenerativ-Schachtofen mit zwei Schächten, die abwechselnd als Brennschacht und als Regenerativschacht betrieben werden, wobei das Material durch eine Vorwärmzone, mindestens eine Brennzone und eine Kühlzone zu einem Materialauslass strömt. Der Brennstoff wird innerhalb oder oberhalb der Vorwärmzone in den jeweiligen Schacht aufgegeben, sodass der Brennstoff in der Vorwärmzone vor dem Eintritt in die Brennzone erwärmt wird. Unter "oberhalb der Vorwärmzone" ist in diesem Zusammenhang in Strömungsrichtung des Materials stromaufwärts der Vorwärmzone zu verstehen. Vorzugsweise wird der Brennstoff ausschließlich innerhalb oder oberhalb der Vorwärmzone aufgegeben. Bei dem Brennstoff handelt es sich beispielsweise um ein Brenngas, wie Hochofengas, mit einem Heizwert von weniger als 6,6 MJ/Nm³.

Dies ermöglicht eine gleichmäßige Gas- und Temperaturverteilung in den Schächten was eine Voraussetzung für die Erzeugung einer guten und gleichmäßigen Produktqualität ist.

Der Gleichstrom-Gegenstrom-Regenerativ-Schachtofen zum Brennen und Kühlen von Material, wie Karbonatgesteinen, weist mindestens zwei Schächten auf, die vorzugsweise parallel zueinander und vertikal angeordnet sind. Die Schächte sind abwechselnd als Brennschacht und als Regenerativschacht betreibbar, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist. Jeder Schacht weist vorzugsweise einen Materialeinlass zu Einlassen von zu brennendem Material in den Schacht auf, wobei sich der Materialeinlass insbesondere am oberen Ende des jeweiligen Schachts befinden, sodass das Material schwerkraftbedingt in den jeweiligen Schacht fällt. Die Aufgabe des zu brennenden Materials erfolgt beispielsweise auf dem gleichen Höhenniveau wie der Einlass des Brennstoffs in den jeweiligen Schacht. Der Brennstoffeinlass ist oberhalb oder innerhalb der Vorwärmzone angeordnet. Insbesondere erfolgt die Brennstoffzufuhr an dem oberen Ende der Vorwärmzone, sodass der Brennstoff, insbesondere das Brenngas, die gesamte Vorwärmzone vollständig vor dem Eintritt in die Brennzone passiert.

Die Schächte sind vorzugsweise über einen Gaskanal gastechnisch miteinander verbunden, sodass Gas von einem Schacht zu dem anderen Schacht strömen kann. Der Gaskanal hat die Funktion eines Überstromkanals zwischen den beiden Schächten.

Bei dem zu brennenden Material handelt es sich insbesondere um Kalk- oder Dolomitstein.

Gemäß einer ersten Ausführungsform wird Oxidationsgas in die Brennzone aufgegeben. Vorzugsweise wird das Oxidationsgas ausschließlich in der Brennzone und nicht in der Vorwärmzone aufgegeben. Die Mittel zum Einleiten des Oxidationsgases sind insbesondere innerhalb der Brennzone angeordnet. Die Einfuhr von Oxidationsgas, wie beispielsweise Luft, mit Sauerstoff angereicherte Luft oder ein sauerstoffhaltiges Gas mit einem Sauerstoffanteil von etwa 80% oder nahezu reiner Sauerstoff, erfolgt vorzugsweise in Strömungsrichtung des Materials innerhalb der Vorwärmzone, am Eingang der Brennzone oder innerhalb der Brennzone. Die Einfuhr von Oxidationsgas erfolgt gemäß einer weiteren Ausführungsform über eine Mehrzahl von Lanzen in die Brennzone. Beispielsweise wird das Oxidationsgas über die Lanzen in den jeweiligen Schacht eingeleitet, wobei die Lanzen insbesondere L-förmig ausgebildet, gleichmäßig zueinander beabstandet sind und sich von der Vorwärmzone in die Brennzone erstrecken, sodass das Oxidationsgas vorzugsweise innerhalb der Lanzen in der Vorwärmzone erwärmt wird und die Lanzen in der Brennzone verlässt. Das bietet den Vorteil einer gezielten Einleitung von Oxidationsgas in die Brennzone, in der die Verbrennung des Brenngases stattfindet.

Es ist ebenfalls denkbar, die Oxidationsluft über zumindest einen oder eine Mehrzahl von Schlitzen in der Schachtwand in den Schacht einzuführen. Die Schlitze erstrecken sich beispielsweise im Wesentlichen horizontal, insbesondere quer zur Materialströmungsrichtung. Die Schlitze bilden Einlässe zum Einlassen der Oxidationsluft in den jeweiligen Schacht und sind beispielsweise alle auf dem gleichen Höhenniveau angeordnet und insbesondere gleichmäßig zueinander beabstandet angeordnet. Der Vorteil einer solchen Ausführung besteht darin, dass ein dünner vorhangartiger Oxidationsgasstrom an oder in der Näher der Schachtinnenwand nach unten, in Materialströmungsrichtung, strömt, sodass das CO des Brenngases vollständig verbrennt. Die voran beschriebenen Lanzen können alternativ oder zusätzlich zu den Schlitzen vorgesehen sein.

Vorzugsweise sind an mehreren Positionen innerhalb eines Schachts Einlässe zum Einlassen von Oxidationsgas vorgesehen. Beispielsweise sind die Einlässe schlitzförmig in der Schachtwand oder als Lanzen ausgeführt. Solche Einlässe sind beispielsweise auf mehreren in Materialströmungsrichtung aufeinander folgenden Positionen innerhalb der Brennzone vorgesehen. Es ist ebenfalls denkbar, Einlässe innerhalb der Vorwärmzone, insbesondere an der Grenze zwischen der Vorwärmzone und der Brennzone vorzusehen.

Gemäß einer weiteren Ausführungsform weist der Brennstoff, insbesondere das Brenngas, einen Heizwert von weniger als 6,6 MJ/Nm³, insbesondere 1 MJ/Nm³ bis 7 MJ/Nm³, vorzugsweise 2 MJ/Nm³ bis 4 MJ/Nm³, höchstvorzugsweise 3,3 MJ/Nm³ auf.

An dem Übergang zwischen der Vorwärmzone und der Brennzone oder innerhalb der Vorwärmzone oder innerhalb der Brennzone ist gemäß einer weiteren Ausführungsform ein Strömungswiderstand zum Erzeugen eines Gasvolumens ohne zu brennendes Material, angeordnet, wobei innerhalb dieses Gasvolumens ohne zu brennendes Material das Oxidationsgas eingeleitet wird. Bei dem Strömungswiderstand handelt es sich beispielsweise um einen quer zur Materialströmungsrichtung angeordneten Balken. Unterhalb des Balkens bildet sich ein Gasvolumen ohne zu brennendes Material, in dem das Oxidationsgas eingeleitet wird. Dies bietet den Vorteil einer gleichmäßigen Einleitung und Verteilung des Oxidationsgases in den jeweiligen Schacht.

Gemäß einer weiteren Ausführungsform wird das Oxidationsgas in einen um die Brennzone, insbesondere um den Übergang zwischen der Vorwärmzone und der Brennzone, angeordneten Ringraum eingeleitet. Der Ringraum ist vorzugsweise konzentrisch um die Vorwärmzone und/ oder die Brennzone eines oder aller Schächte des GGR-Schachtofens angeordnet. Der Ringraum stellt eine Gasvolumen ohne zu brennendes Material, dar, in dem das Oxidationsgas vorteilhafterweise eingeleitet wird.

Jeweils ein Schacht wird gemäß einer weiteren Ausführungsform über die zeitliche Länge eines Brennzyklus als Brennschacht betrieben und während eines Brennzyklus erfolgen die folgenden Verfahrensschritte:
a. Zuführen von Brennstoff durch den Brennstoffeinlass in den Brennschacht über das Zeitintervall einer Brennstoffzufuhrzeit,
b. Zuführen eines inerten Gases durch den Brennstoffeinlass in den Brennschacht über das Zeitintervall einer Vorspülzeit,
c. Zuführen eines sauerstoffarmen Gases durch den Brennstoffeinlass in den Brennschacht über das Zeitintervall einer Nachspülzeit,
d. Umsteuern des Ofenbetriebs, wobei die Funktion des Brennschachts und des Regenerativschachtes umgekehrt werden.

Die voran beschriebenen Verfahrensschritte werden vorzugsweise in der aufgeführten Reihenfolge nacheinander durchgeführt.

Bei dem inerten Gas handelt es sich beispielsweise um Stickstoff oder Kohlendioxid.. Das inerte Gas wird vorzugsweise über die Brennstoffeinlässe oberhalb oder innerhalb der Vorwärmzone in den Brennschacht eingeleitet, dadurch wird das Brenngas vorzugsweise in Strömungsrichtung des Materials nach unten geschoben. Nach der Vorspülzeit befindet sich vorzugsweise kein zündfähiges Gasgemisch mehr innerhalb oder oberhalb der Vorwärmzone des Brennschachtes. An die Vorspülzeit schließt sich vorzugsweise zeitlich die Nachspülzeit an, wobei an den Brennstoffeinlässen des Brennschachts ein sauerstoffarmes Gas, wie beispielsweise Ofenabgas in den Brennschacht eingeführt wird, wodurch vorzugsweise das bereits verdünnte Brenngas in Strömungsrichtung des Materials weiter nach unten innerhalb des Brennschachtes geschoben wird. Am Ende der Nachspülzeit ist die Konzentration von umweltschädlichen Gasen innerhalb und oberhalb der Vorwärmzone des Brennschachtes vorzugsweise so gering, dass die Umsteuerung zum anderen, noch als Regenerationsschacht betriebenen, Schacht eingeleitet werden kann.

Dies bietet den Vorteil, dass die bei einer Umkehr der Betriebsweise, bzw. dem Ende eines Zyklus, wobei der Betrieb der Schächte als Brennschacht oder Regenerationsschacht getauscht wird, noch nicht verbranntes Brenngas innerhalb der Brennzone des Brennschachtes vorzugsweise vollständig verbrannt wird bevor die Funktion der Ofenschächte getauscht wird, um die Explosionsgefahr zu minimieren und unzulässige Emissionen in die Atmosphäre zu verhindern.

Gemäß einer weiteren Ausführungsform wird während der Vorspülzeit und/ oder der Nachspülzeit ein Oxidationsgas über die Lanzen in den Brennschacht eingeführt. Dadurch werden die verbrennungsfähigen Gase, welche während der Vor- und Nachspülzeit von oben in die Brennzone einströmen, vollständig verbrannt.

Die Erfindung betrifft auch einen Gleichstrom-Gegenstrom-Regenerativ-Schachtofen zum Brennen und Kühlen von Material, wie Karbonatgesteinen, mit zwei Schächten, die abwechselnd als Brennschacht und als Regenerativschacht betreibbar sind, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist. Oberhalb oder innerhalb der Vorwärmzone ist ein Brennstoffeinlass zum Einlassen von Brennstoff in den jeweiligen Schacht angeordnet. Die vorangehend mit Bezug auf das Verfahren zum Betreiben des GGR-Schachtofens beschriebenen Vorteile und Ausgestaltungen treffen ebenfalls in vorrichtungsgemäßer Entsprechung auf den GGR-Schachtofen zu.

Innerhalb der Brennzone sind gemäß einer Ausführungsform eine Mehrzahl von Lanzen oder Schlitzen in der Schachtwand zum Einführen von Oxidationsgas angeordnet. Die Lanzen erstrecken sich beispielsweise von der Vorwärmzone in die Brennzone, sodass der Auslass der Lanzen innerhalb der Brennzone angeordnet ist.

Gemäß einer weiteren Ausführungsform sind innerhalb der Brennzone eine Mehrzahl von Gaslanzen oder Schlitze in der Schachtwand zum Einführen von Oxidationsgas angeordnet. Die Gaslanzen sind vorzugsweise alternativ oder zusätzlich zu den voran beschriebenen Lanzen innerhalb der Brennzone und/ oder der Kühlzone und/ oder innerhalb eines Gaskanals zur Verbindung der Schächte angeordnet, wobei die Gaslanzen insbesondere in Strömungsrichtung des Materials stromabwärts der Lanzen angeordnet sind. Die Gaslanzen sind beispielsweise innerhalb der Brennzone und/ oder der Kühlzone gleichmäßig zueinander beabstandet angeordnet. Ein Einleiten von Oxidationsgas an einem weiteren stromabwärts gelegenen Bereich innerhalb der Brennzone und/ oder der Kühlzone sorgt für eine vollständige Verbrennung des Brennstoffs innerhalb des GGR-Schachtofens.

Gemäß einer weiteren Ausführungsform ist an dem Übergang zwischen der Vorwärmzone und der Brennzone ein Strömungswiderstand zum Erzeugen eines Gasvolumens ohne zu brennendes Material, angeordnet. Gemäß einer weiteren Ausführungsform sind Mittel zum Einleiten von Oxidationsgas in das Gasvolumen ohne zu brennendem Material angeordnet.

Jeder Schacht weist gemäß einer weiteren Ausführungsform jeweils einen Gassammelkanal auf, der als Ringraum ausgebildet ist und wobei die Gassammelkanäle der Schächte miteinander über einen Gaskanal gastechnisch verbunden sind. Vorzugsweise weist der GGR-Schachtofen einen Gaskanal zur gastechnischen Verbindung der Schächte miteinander auf, wobei der Gaskanal beispielsweise die Kühlzonen und/ oder die Brennzonen der Schächte an einem Bereich miteinander verbindet. Der Gassammelkanal ist vorzugsweise als Ringraum um die Kühlzone und/ oder die Brennzone des jeweiligen Schachts angeordnet.

Diese bietet den Vorteil einer gleichmäßigeren Gas- und Temperaturverteilung in den Schächten und einer daraus resultierenden besseren Produktqualität bei einer geringen Schadstoffemission. Ein weiterer Vorteil besteht darin, dass unverbrannte Brenngase, welche aus der Vorwärmzone in den Gaskanal strömen, dort zusammen mit der Kühlluft, welche dem Brennschacht zugeführt wird, besser nachverbrannt werden, da das Gaskanalvolumen wesentlich grösser ist.

### Beschreibung der Zeichnungen

Die Erfindung ist nachfolgend anhand mehrerer Ausführungsbeispiele mit Bezug auf die beiliegenden Figuren näher erläutert.
Fig. 1 zeigt eine schematische Darstellung eines GGR-Schachtofens in einer Längs und Querschnittansicht gemäß einem Ausführungsbeispiel.
Fig. 2 zeigt eine schematische Darstellung eines GGR-Schachtofens in einer Längs und Querschnittansicht gemäß einem weiteren Ausführungsbeispiel.
Fig. 3 zeigt eine schematische Darstellung eines GGR-Schachtofens in einer Längs und Querschnittansicht gemäß einem weiteren Ausführungsbeispiel.
Fig. 4 zeigt eine schematische Darstellung eines GGR-Schachtofens in einer Längsschnittansicht gemäß einem weiteren Ausführungsbeispiel.
Fig. 5 zeigt eine schematische Darstellung der zeitlichen Abläufe innerhalb des als Brennschacht betriebenen Schachtes über einen Brennzyklus gemäß einem Ausführungsbeispiel.

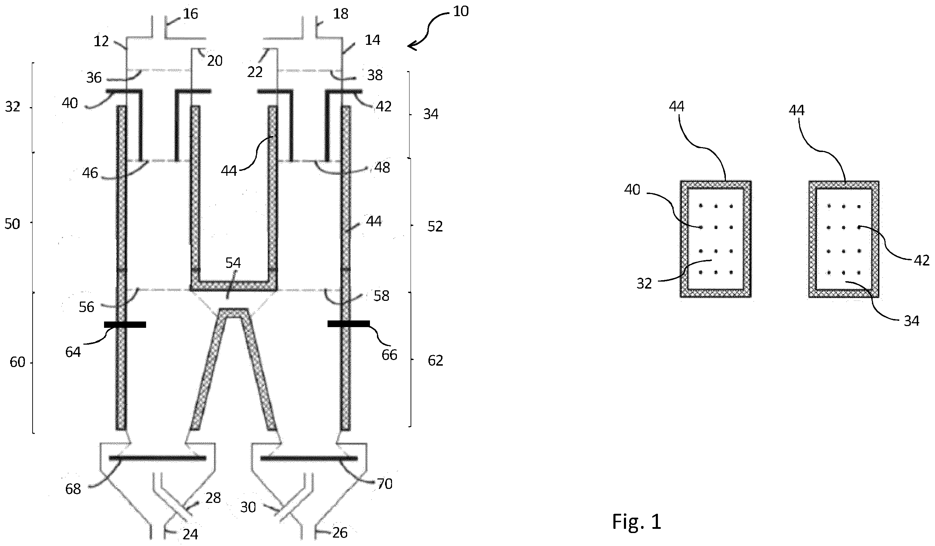

Fig. 1 zeigt einen GGR-Schachtofen 10 mit zwei parallelen und vertikal ausgerichteten Schächten 12, 14. Jeder Schacht 12, 14 weist jeweils einen Materialeinlass 16, 18 zum Einlassen von zu brennenden Material in den jeweiligen Schacht 12, 14 des GGR-Schachtofens. Die Materialeinlässe 16, 18 sind beispielhaft an dem oberen Ende des jeweiligen Schachts 12, 14 angeordnet, sodass das Material durch den Materialeinlass 16, 18 schwerkraftbedingt in den Schacht 12, 14 fällt.

Jeder Schacht 12, 14 weist an seinem oberen Ende des Weiteren einen Brennstoffeinlass 20, 22 zum Einlassen von Brenngasen auf. Die Brennstoffeinlässe 20, 22 sind beispielhaft auf demselben Höhenniveau wie die Materialeinlässe 16, 18 angeordnet.

An dem unteren Ende jedes Schachtes 12, 14 ist ein Materialauslass 24, 26 zum Auslassen des in dem jeweiligen Schacht 12, 14 gebrannten Materials. Jeder Schacht 12, 14 weist an seinem unteren Ende einen Kühllufteinlass 28, 30 zum Einlassen von Kühlluft in de jeweilige Schacht 12, 14 auf. Im Betrieb des GGR-Schachtofens 10 strömt das zu brennende Material von oben nach unten durch den jeweiligen Schacht 12, 14, wobei die Kühlluft von unten nach oben, im Gegenstrom zu dem Material, durch den jeweiligen Schacht strömt. Das Ofenabgas wird beispielsweise durch den Materialeinlass 16, 18 oder durch den Brennstoffeinlass 20, 22 oder einen dazu separaten Gasauslass aus dem jeweiligen Schacht 12, 14 abgeführt.

Unterhalb der Materialeinlässe 16, 18 und der Brennstoffeinlässe 20, 22 schließt sich in Strömungsrichtung des Materials die Vorwärmzone 32, 34 des jeweilige Schachtes 12, 14 an. In der Vorwärmzone 32, 34 wird das Material und der Brennstoff vorzugsweise auf etwa 700°C vorgewärmt. Vorzugsweise ist der jeweilige Schacht 12 bis zu der oberen Begrenzungsfläche 36, 38 der Vorwärmzone 32, 34 mit zu brennendem Material gefüllt. Das Material und der Brennstoff, insbesondere das Brenngas, werden vorzugsweise oberhalb der Vorwärmzone 32, 34 in den jeweiligen Schacht aufgegeben. Zumindest ein Teil der Vorwärmzone 32, 34 und der sich in Strömungsrichtung des Materials daran anschließende Teil des jeweiligen Schachtes 12, 14 sind beispielsweise mit einer feuerfesten Auskleidung 44 umgeben.

In der Vorwärmzone 32, 34 sind optional eine Mehrzahl von Lanzen 40, 42 angeordnet und dienen jeweils als Einlass für ein Oxidationsgas, wie beispielsweise sauerstoffhaltige Luft, insbesondere mit Sauerstoff angereicherte Luft oder ein Gas mit einem Sauerstoffanteil von etwa 80% oder nahezu reiner Sauerstoff. Fig. 1 zeigt ebenfalls eine Querschnittsansicht des GGR-Schachtofens 10 auf dem Höhenniveau der Lanzen 40, 42. Beispielhaft sind in jedem Schacht 12, 14 zwölf Lanzen 40, 42 und im Wesentlichen gleichmäßig zueinander beabstandet angeordnet. Die Lanzen 40, 42 weisen beispielsweise eine L-Form auf und erstrecken sich vorzugsweise in horizontaler Richtung in den jeweiligen Schacht 12, 14 hinein und innerhalb des Schachtes 12, 14 in vertikaler Richtung, insbesondere in Strömungsrichtung des Materials. Die Enden der Lanzen 40, 42 eines Schachtes 12, 14 sind vorzugsweise auf demselben Höhenniveau angeordnet. Vorzugsweise ist die Ebene, an der die Lanzenenden 40, 42 angeordnet sind, jeweils die unteren Begrenzungsflächen 46, 48 der jeweiligen Vorwärmzone 32, 34. Alternativ oder zusätzlich zu den Lanzen 40, 42 können auch Schlitze in der Schachtwand Einlässe zum Einlassen von Oxidationsluft in den Schacht ausbilden.

An die Vorwärmzone 32, 34 schließt sich in Strömungsrichtung des Materials die Brennzone 50, 52 an. In der Brennzone wird der Brennstoff verbrannt und das vorgewärmte Material bei einer Temperatur von etwa 1000°C gebrannt. Das durch die Lanzen 40, 42 in die Brennzone 50, 52 eingeführte Oxidationsgas ermöglicht die Verbrennung des Brennstoffes in der Brennzone 50, 52. Innerhalb des Brennzone 50, 52 und/ oder der Kühlzone 60, 62 sind optional eine Mehrzahl von Gaslanzen 64, 66 vorgesehen, die sich an einer Position in Strömungsrichtung des Materials stromabwärts der voran beschriebenen Lanzen 40, 42 in die Brennzone 50, 52 und/ oder die Kühlzone 60, 62 erstrecken und dem Einlass von Oxidationsgas in die Brennzone 50, 52 und/ oder der Kühlzone 60, 62 dienen. Die Gaslanzen 64, 66 sind beispielsweise in einem unteren Bereich der Brennzone nahe der unteren Begrenzungsfläche 56, 58 der Brennzone 50 und/ oder im oberen Bereich der Kühlzone 60, 62 nahe der unteren Grenze der Brennzone 50, 52 angeordnet. Es ist ebenfalls denkbar, die Gaslanzen 64, 66, wie in Fig. 1 dargestellt, innerhalb der Kühlzone 60, 62, vorzusehen.

Der GGR-Schachtofen 10 weist des Weiteren einen Gaskanal 54 zum gastechnischen Verbinden der beiden Schächte 12, 14 miteinander auf. Auf dem oberen Höhenniveau des Gaskanals 54 ist vorzugsweise die untere Begrenzungsfläche 56, 58 der Brennzone 50, 52, insbesondere das Ende der Brennzone 50, 52, angeordnet. An die Brennzone 50, 52 schließt sich in Strömungsrichtung des Materials in jedem Schacht 12, 14 eine Kühlzone 60, 62, die sich bis zum Materialauslass 24, 26 oder der Austragseinrichtung 68, 70 des jeweiligen Schachtes erstreckt. Das Material wird innerhalb der Kühlzone 60, 62 auf etwa 100°C abgekühlt.

An dem materialauslassseitigen Ende eines jeden Schachtes 12, 14 ist eine Austragseinrichtung 68, 70 angeordnet. Die Austragseinrichtungen 68, 70 umfassen beispielsweise horizontale Platten, die einen seitlichen Durchtritt des Materials zwischen den Austragseinrichtungen 68, 70 und der Gehäusewand des GGR-Schachtofens erlauben. Die Austragseinrichtung 68, 70 ist vorzugsweise als Schuboder Drehtisch oder als Tisch mit Schubräumer ausgeführt. Dies ermöglicht eine gleichmäßige Durchsatzgeschwindigkeit des Brennguts durch die Ofenschächte 12, 14.

Im Betrieb des GGR-Schachtofens 10 ist jeweils einer der Schächte 12, 14 aktiv, wobei der jeweils andere Schacht 12, 14 passiv ist. Der aktive Schacht 12, 14 wird als Brennschacht und der passive Schacht 12, 14 als Regenerativschacht bezeichnet. Der GGR-Schachtofen 10 wird zyklisch betrieben, eine übliche Zykluszahl beträgt 75 bis 150 Zyklen pro Tag. Nach Ablauf der Zykluszeit wird die Funktion der Schächte 12, 14 getauscht. Dieser Vorgang wiederholt sich fortlaufend. Über die Materialeinlässe 16, 18 wird abwechseln Material wie Kalk- oder Dolomitstein in den jeweils als Brennschacht betriebenen Schacht 12, 14 aufgegeben. In dem als Brennschacht betriebenen Schacht 12, 14 wird über den Brennstoffeinlas 20, 22 ein Brenngas, wie beispielsweise Hochofengas, in den Brennschacht eingeleitet, wobei der Brennstoffeinlass 20, 22 in dem Regenerativschacht als Abgasauslass dient. Das Brenngas wird in der Vorwärmzone 32, 34 des Brennschachts auf eine Temperatur von etwa 700°C erwärmt.

Durch die Lanzen 40, 42 wird in dem Brennschacht ein Oxydationsgas beispielsweise Luft, mit Sauerstoff angereicherte Luft oder Sauerstoff, vorzugsweise jedoch ein Oxydationsgas mit hohem Sauerstoffgehalt, höchstvorzugsweise ein Oxydationsgas mit einem Sauerstoffgehalt von mehr als 80 Volumenprozent zugeführt. Durch dieses Verfahren verringern sich die Gasmengen, welche durch die Brennzone 50, 52 und durch die Vorwärmzone 32, 34 des Regenerativschachtes strömen, erheblich wobei die durch die Vorwärmzone 32, 34 des Regenerativschachtes strömenden Gase, keinen Wärmeüberschuss enthalten und vorzugsweise eine Abgastemperatur von ca. 100°C aufweisen. Wegen der kleineren Gasmengen reduziert sich der Druckverlust des gesamten Ofens erheblich, was zu einer erheblichen Einsparung an elektrischer Energie an den Prozessgasverdichtern führt.

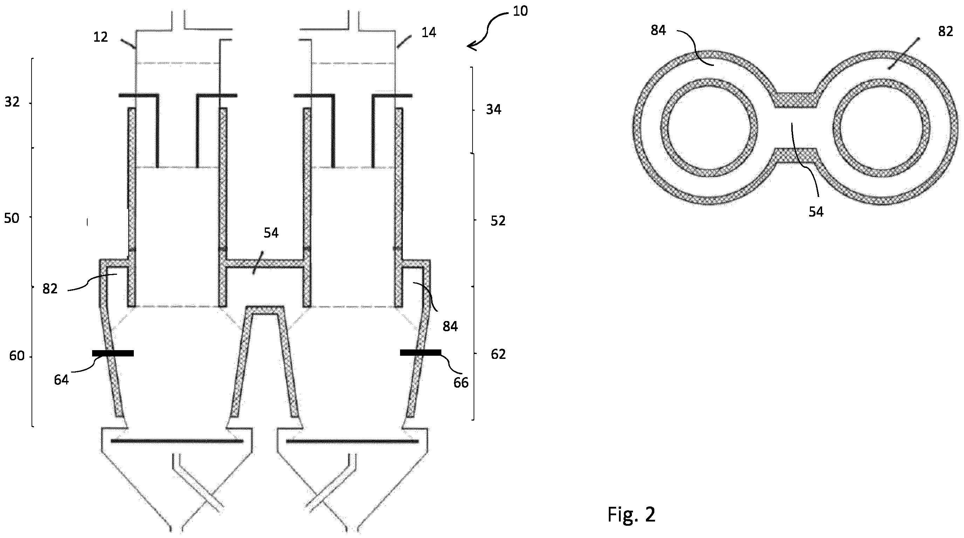

Fig. 2 zeigt ein weiteres Ausführungsbeispiel eines GGR-Schachtofens 10 mit zwei parallelen Schächten 12, 14, wobei der GGR-Schachtofen im Wesentlichen dem GGR-Schachtofen 10 der Fig. 1 entspricht. Der Übersicht halber wurde auf einige Bezugszeichen verzichtet, die bereits in Fig. 1 erläutert wurden. Im Unterschied zu dem GGR-Schachtofen 10 der Fig. 1 weist der GGR-Schachtofen 10 der Fig. 2 einen runden Querschnitts auf. Es sind allerdings sämtliche Querschnittsformen, wie rund, oval, viereckig oder vieleckig denkbar. Des Weiteren weist der GGR-Schachtofen 10 der Fig. 2 einen Gassammelkanal 82, 84 auf, der als Ringraum ausgebildet ist. Der Gassammelkanal erstreckt sich vorzugsweise umfangsmäßig um den unteren Bereich der Brennzone 50, 52, insbesondere unterhalb der Gaslanzen 64, 66. Jeder Schacht 12, 14 weist jeweils einen Gassammelkanal 82, 84 auf, wobei die Gassammelkanäle 82, 84 auf dem Höhenniveau des Gaskanals 54 zur Verbindung der beiden Schächte 12, 14 angeordnet sind. Die Gassammelkanäle 82, 84 der beiden Schächte 12, 14 sind insbesondere über den Gaskanal 54 miteinander gastechnisch verbunden. Insbesondere ist der Gassammelkanal 82 gastechnisch mit der Kühlzone 60, 62 verbunden, sodass das Kühlgas zumindest teilweise in den Gassammelkanal 82 strömt.

Diese Bauweise führt vorteilhafterweise zu einer gleichmäßigeren Gas- und Temperaturverteilung in den Schächten 12, 14 und dadurch zu besserer Produktqualität und zu geringeren Schadstoffemissionen. Ein weiterer Vorteil dieser Bauweise besteht darin, dass allenfalls unverbrannte Brenngase, welche aus der Vorwärmzone 32, 34 in den Gaskanal 54 strömen dort zusammen mit der Kühlluft, welche dem Brennschacht zugeführt wird noch besser nachverbrannt werden, da das Gaskanalvolumen wesentlich grösser ist.

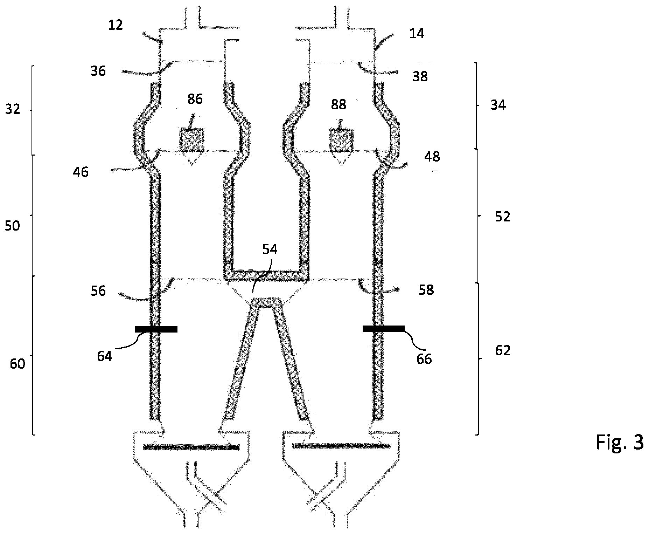

Fig. 3 zeigt ein weiteres Ausführungsbeispiel eines GGR-Schachtofens 10 mit zwei parallelen Schachten 12, 14, wobei der GGR-Schachtofen im Wesentlichen dem GGR-Schachtofen 10 der Fig. 1 entspricht. Der Übersicht halber wurde auf einige Bezugszeichen verzichtet, die bereits in Fig. 1 erläutert wurden. Im Unterschied zu dem GGR-Schachtofen 10 der Fig. 1 weist der GGR-Schachtofen 10 der Fig. 3 keine Lanzen 40, 42 auf. Leidglich die Gaslanzen 64, 66 innerhalb der Brennzone 50, 52 und/ oder der Kühlzone 60, 62 sind vorgesehen. Des Weiteren weist der GGR-Schachtofen 10 der Fig. 3 in jeder Vorwärmzone 32, 34 einen quer zur Materialströmungsrichtung ausgerichteten Strömungswiderstand, insbesondere einen Balken 86, 88, auf. Unterhalb der Balken 86, 88 wird Oxidationsgas, wie beispielsweise Luft, mit Sauerstoff angereicherte Luft, Sauerstoff oder ein Oxidationsgas mit einem Sauerstoffanteil von mindestens 80% eingeleitet.

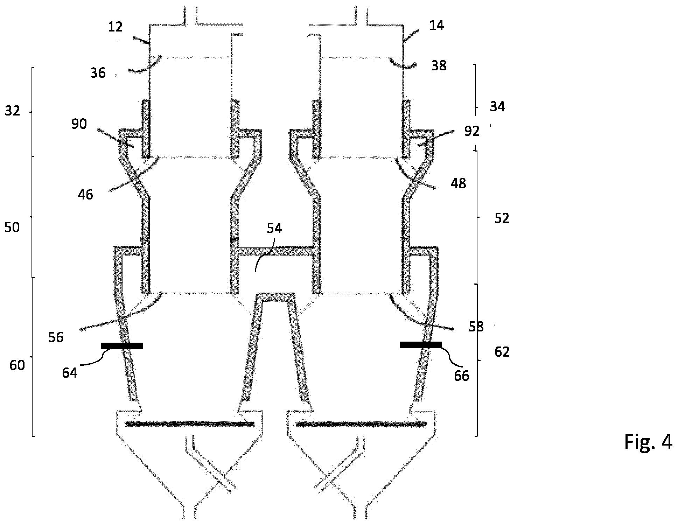

Fig. 4 zeigt ein weiteres Ausführungsbeispiel eines GGR-Schachtofens 10 mit zwei parallelen Schachten 12, 14, wobei der GGR-Schachtofen im Wesentlichen dem GGR-Schachtofen 10 der Fig. 2 entspricht. Der Übersicht halber wurde auf einige Bezugszeichen verzichtet, die bereits in Fig. 2 erläutert wurden. Im Unterschied zu dem GGR-Schachtofen 10 der Fig. 2 weist der GGR-Schachtofen 10 der Fig. 4 keine Lanzen 40, 42 auf. Der GGR-Schachtofen 10 der Fig. 4 weist einen weiteren Ringraum 90, 92 auf, der sich um den unteren Bereich jeweils einer Vorwärmzone 32, 34 erstreckt. Der Ringraum 90, 92 ist gastechnisch mit der Brennzone verbunden und stellt beispielsweise einen Bereich dar, in dem kein zu brennendes Material vorhanden ist. Innerhalb des Ringraums 90, 92 wird vorzugsweise ein Oxydationsgas beispielsweise Luft oder mit Sauerstoff angereicherte Luft oder Sauerstoff, vorzugsweise jedoch ein Oxydationsgas mit hohem Sauerstoffgehalt, höchstvorzugsweise ein Oxydationsgas mit einem Sauerstoffgehalt von mehr als 80 Volumenprozent zugeführt.

Beispielhaft weisen die GGR-Schachtöfen der Fig. 1 bis 4 jeweils zwei Schächte 12, 14 auf. Es ist ebenfalls denkbar, dass drei oder mehr miteinander verbundene Schächte in einem GGR-Schachtofen vorgesehen sind. Die in den Figuren 1 bis 4 dargestellten die Gaslanzen 64, 66 können beispielsweise zusätzlich oder alternativ zu den dargestellten Gaslanzen innerhalb des Gaskanals 54 angeordnet sein, sodass Oxidationsgas direkt in den Gaskanal ein geführt wird.

Jeder der Schächte 12, 14 des GGR-Schachtofens 10 wird über eine Brennzykluszeit als Brennschacht und anschließend über eine Regenerationszykluszeit als Regenerationsschacht betrieben.

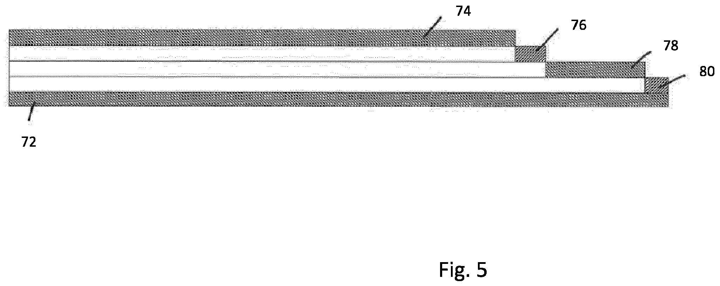

In Figur 5 sind die zeitlichen Abläufe innerhalb eines Brennzyklus dargestellt. Die Brennzykluszeit 72 wird unterteilt in die Brennstoffzufuhrzeit 74, die Vorspülzeit 76, die Nachspülzeit 78 und die Umsteuerzeit 80. In der Vorspülzeit 76 wird unmittelbar nach dem Abschalten der Brennstoffzufuhr an den Brennstoffeinlässen 20, 22 am Brennschacht ein inertes Gas, wie beispielsweise Stickstoff oder Kohlendioxid, zugeführt und dadurch das Brenngas vorzugsweise in Strömungsrichtung des Materials nach unten geschoben. Am Ende der Vorspülzeit 76 befindet sich vorzugsweise kein zündfähiges Gasgemisch mehr innerhalb oder oberhalb der Vorwärmzone 32, 34 des Brennschachtes. An die Vorspülzeit 76 schließt sich zeitlich die Nachspülzeit 78 an, wobei an den Brennstoffeinlässen 20, 22 des Brennschachts ein sauerstoffarmes Gas, wie beispielsweise Ofenabgas in den Brennschacht eingeführt wird, wodurch vorzugsweise das bereits verdünnte Brenngas in Strömungsrichtung des Materials weiter nach unten innerhalb des Brennschachtes geschoben wird. Am Ende der Nachspülzeit 78 ist die Konzentration von umweltschädlichen Gasen innerhalb und oberhalb der Vorwärmzone 32, 34 des Brennschachtes vorzugsweise so gering, dass die Umsteuerung zum anderen, noch als Regenerationsschacht betriebene, Schacht 12, 14 eingeleitet werden kann. Vorzugsweise wird während der Vorspülzeit 76 und der Nachspülzeit 78 über die Lanzen 40, 42 insbesondere kontinuierlich ein Oxydationsgas in den Brennschacht eingeleitet, sodass die verbrennungsfähigen Gase, welche während der Vor- und Nachspülzeit von oben in die Brennzone 50, 52 einströmen vollständig verbrannt werden.

Das voran beschriebene Verfahren zum Betreiben des GGR-Schachtofens 10 bietet den Vorteil, dass die bei einer Umkehr der Betriebsweise, bzw. dem Ende eines Zyklus, wobei der Betrieb der Schächte 12, 14 als Brennschacht oder Regenerationsschacht getauscht wird, noch nicht verbranntes Brenngas innerhalb der Brennzone 50, 52 des Brennschachtes vorzugsweise vollständig verbrannt werden bevor die Funktion der Ofenschächte getauscht wird, um die Explosionsgefahr zu minimieren und unzulässige Emissionen in die Atmosphäre zu verhindern.

Es ist ebenfalls möglich, den voran beschriebenen GGR- Schachtofen 10, insbesondere in der Anlaufphase, derart zu betreiben, dass Oxidationsgas durch die Brennstoffeinlässe 20, 22 in den jeweiligen Schacht 12, 14 aufgegeben werden, wobei der Brennstoff, insbesondere das Brenngas, über die Lanzen 40, 42 in den Übergang zwischen Vorwärmzone 32, 34 und Brennzone 50, 52 aufgegeben wird.

### Bezugszeichenliste

- 10: GGR-Schachtofen
- 12, 14: Schacht
- 16, 18: Materialeinlass
- 20, 22: Brennstoffeinlass
- 24, 26: Materialauslass
- 28, 30: Kühllufteinlass
- 32, 34: Vorwärmzone
- 36, 38: obere Begrenzungsfläche der Vorwärmzone
- 40, 42: Lanzen
- 44: feuerfeste Auskleidung
- 46, 48: untere Begrenzungsfläche der Vorwärmzone/ obere Begrenzungsfläche der Brennzone
- 50, 52: Brennzone
- 54: Gaskanal
- 56, 58: untere Begrenzungsfläche der Brennzone/ obere Begrenzungsfläche der Kühlzone
- 60, 62: Kühlzone
- 64, 66: Gaslanzen
- 68, 70: Austragseinrichtung
- 72: Brennzykluszeit
- 74: Brennstoffzufuhrzeit
- 76: Vorspülzeit
- 78: Nachspülzeit
- 80: Umsteuerzeit
- 82, 84: Gassammelkanal
- 86, 88: Balken
- 90, 92: Ringraum

## Patentansprüche

1. Verfahren zum Brennen und Kühlen von Material, wie Karbonatgesteinen, in einem Gleichstrom-Gegenstrom-Regenerativ-Schachtofen (10) mit zwei Schächten (12, 14), die abwechselnd als Brennschacht und als Regenerativschacht betrieben werden, wobei das Material durch eine Vorwärmzone (32, 34), mindestens eine Brennzone (50, 52) und eine Kühlzone (60, 62) zu einem Materialauslass (24, 26) strömt,
**dadurch gekennzeichnet, dass**
eine Brennstoffzufuhr innerhalb oder oberhalb der Vorwärmzone (32, 34) erfolgt, sodass der Brennstoff in der Vorwärmzone (32, 34) vor dem Eintritt in die Brennzone (50, 52) erwärmt wird.

2. Verfahren nach Anspruch 1, wobei Oxidationsgas in die Brennzone (50, 52) aufgegeben wird.

3. Verfahren nach einem der vorangehenden Ansprüche, wobei der Brennstoff einen Heizwert von weniger als 6,6 MJ/Nm³, insbesondere 1 MJ/Nm³ bis 7 MJ/Nm³, vorzugsweise 2 MJ/Nm³ bis 4 MJ/Nm³, höchstvorzugsweise 3,3 MJ/Nm³ aufweist.

4. Verfahren nach einem der vorangehenden Ansprüche, wobei die Einfuhr von Oxidationsgas über eine Mehrzahl von Lanzen (40, 42) oder Schlitzen in der Schachtwand in die Brennzone (50, 52) erfolgt.

5. Verfahren nach einem der vorangehenden Ansprüche, wobei an dem Übergang zwischen der Vorwärmzone (32, 34) und der Brennzone (50, 52) ein Strömungswiderstand (86, 88) zum Erzeugen eines Volumenbereichs ohne zu brennendes Material angeordnet ist und in diesen das Oxidationsgas eingeleitet wird.

6. Verfahren nach einem der vorangehenden Ansprüche, wobei das Oxidationsgas in einen um die Brennzone (50, 52), insbesondere um den Übergang zwischen der Vorwärmzone (32, 34) und der Brennzone (50, 52) angeordneten Ringraum (90, 92) eingeleitet wird.

7. Verfahren nach einem der vorangehenden Ansprüche, wobei jeweils ein Schacht (12, 14) über die zeitliche Länge eines Brennzyklus (72) als Brennschacht (12, 14) betrieben wird und während eines Brennzyklus (72) die folgenden Verfahrensschritte erfolgen:
a. Zuführen von Brennstoff durch den Brennstoffeinlass (20, 22) in den Brennschacht über das Zeitintervall einer Brennstoffzufuhrzeit (74),
b. Zuführen eines inerten Gases durch den Brennstoffeinlass (20, 22) in den Brennschacht über eine Vorspülzeit (76),
c. Zuführen eines sauerstoffarmen Gases durch den Brennstoffeinlass (20, 22) in den Brennschacht über eine Nachspülzeit (78),
d. Umsteuern des Ofenbetriebs, wobei die Funktion des Brennschachts und des Regenerativschachtes (12, 14) umgekehrt werden.

8. Verfahren nach Anspruch 7, wobei während der Vorspülzeit (76) und/ oder der Nachspülzeit (78) ein Oxidationsgas über die Lanzen (40, 42) und/ oder Schlitze in der Schachtwand in den Brennschacht (12, 14) eingeführt wird.

9. Gleichstrom-Gegenstrom-Regenerativ-Schachtofen (10) zum Brennen und Kühlen von Material, wie Karbonatgesteinen, mit zwei Schächten (12, 14), die abwechselnd als Brennschacht und als Regenerativschacht betreibbar sind, wobei jeder Schacht (12, 14) in Strömungsrichtung des Materials eine Vorwärmzone (32, 34) zum Vorwärmen des Materials, eine Brennzone (50, 52) zum Brennen des Materials und eine Kühlzone (60, 62) zum Kühlen des Materials aufweist,
**dadurch gekennzeichnet, dass**
oberhalb oder innerhalb der Vorwärmzone (32, 34) ein Brennstoffeinlass (20, 22) zum Einlassen von Brennstoff in den jeweiligen Schacht (12, 14) angeordnet ist.

10. Gleichstrom-Gegenstrom-Regenerativ-Schachtofen (10) nach Anspruch 9, wobei innerhalb der Brennzone (50, 52) eine Mehrzahl von Lanzen (40, 42) oder Schlitzen in der Schachtwand zum Einführen von Oxidationsgas angeordnet sind.

11. Gleichstrom-Gegenstrom-Regenerativ-Schachtofen (10) nach Anspruch 9 oder 10, wobei innerhalb der Brennzone (50, 52), innerhalb der Kühlzone (60, 62) und/ oder innerhalb eines Gaskanals (54) zur Verbindung der Schächte (12, 14) eine Mehrzahl von Gaslanzen (64, 66) zum Einführen von Oxidationsgas angeordnet sind.

12. Gleichstrom-Gegenstrom-Regenerativ-Schachtofen (10) nach einem der Ansprüche 9 bis 11, wobei an dem Übergang zwischen der Vorwärmzone (32, 34) und der Brennzone (50, 52) ein Strömungswiderstand (86, 88) zum Erzeugen eines Volumenbereichs ohne zu brennendes Material angeordnet ist.

13. Gleichstrom-Gegenstrom-Regenerativ-Schachtofen (10) nach einem der Ansprüche 9 bis 11, wobei ein Ringraum (90, 92) um den Übergang zwischen der Vorwärmzone (32, 34) und der Brennzone (50, 52) ausgebildet ist, sodass innerhalb des Ringraums (90, 92) ein Volumenbereich ohne zu brennendes Material ausgebildet ist.

14. Gleichstrom-Gegenstrom-Regenerativ-Schachtofen (10) nach Anspruch 12 oder 13, wobei Mittel zum Einleiten von Oxidationsgas in den Volumenbereich ohne zu brennendes Material angeordnet sind.

15. Gleichstrom-Gegenstrom-Regenerativ-Schachtofen (10) nach einem der Ansprüche 9 bis 14, wobei jeder Schacht (12, 14) jeweils einen Gassammelkanal (82, 84) aufweist, der als Ringraum ausgebildet ist und wobei die Gassammelkanäle (82, 84) der Schächte (12, 14) miteinander über einen Gaskanal (54) gastechnisch verbunden sind.

## Claims

1. Method for burning and cooling material, such as carbonate rocks, in a parallel flow -counter flow regenerative shaft kiln (10) having two shafts (12, 14) which are operated alternately as a burning shaft and as a regenerative shaft, wherein the material flows through a preheating zone (32, 34), at least one burning zone (50, 52), and a cooling zone (60, 62) to a material outlet (24, 26),
**characterized in that**
fuel is supplied inside or above the preheating zone (32, 34), and therefore the fuel is heated in the preheating zone (32, 34) prior to entry into the burning zone (50, 52).

2. Method according to Claim 1, wherein oxidation gas is supplied into the burning zone (50, 52).

3. Method according to either of the preceding claims, wherein the fuel has a calorific value of less than 6.6 MJ/Nm³, in particular 1 MJ/Nm³ to 7 MJ/Nm³, preferably 2 MJ/Nm³ to 4 MJ/Nm³, most preferably 3.3 MJ/Nm³.

4. Method according to one of the preceding claims, wherein oxidation gas is introduced into the burning zone (50, 52) via a multiplicity of lances (40, 42) or slots in the shaft wall.

5. Method according to one of the preceding claims, wherein arranged at the transition between the preheating zone (32, 34) and the burning zone (50, 52) is a flow resistance (86, 88) for generating a volume region without material to be burned, and the oxidation gas is introduced into said region.

6. Method according to one of the preceding claims, wherein the oxidation gas is introduced into an annular space (90, 92) which is arranged around the burning zone (50, 52), in particular around the transition between the preheating zone (32, 34) and the burning zone (50, 52).

7. Method according to one of the preceding claims, wherein a respective shaft (12, 14) is operated as a burning shaft (12, 14) over the length of time of a burning cycle (72), and the following method steps are performed during a burning cycle (72):
a. supplying fuel through the fuel inlet (20, 22) into the burning shaft over the time interval of a fuel supply time (74),
b. supplying an inert gas through the fuel inlet (20, 22) into the burning shaft over a preliminary flushing time (76),
c. supplying a low-oxygen gas through the fuel inlet (20, 22) into the burning shaft over a subsequent flushing time (78),
d. reversing the kiln operation, wherein the functions of the burning shaft and of the regenerative shaft (12, 14) are reversed.

8. Method according to Claim 7, wherein, during the preliminary flushing time (76) and/or the subsequent flushing time (78), an oxidation gas is introduced into the burning shaft (12, 14) via the lances (40, 42) and/or slots in the shaft wall.

9. Parallel flow - counter flow regenerative shaft kiln (10) for burning and cooling material, such as carbonate rocks, having two shafts (12, 14) which can be operated alternately as a burning shaft and as a regenerative shaft, wherein each shaft (12, 14) has, in the direction of flow of the material, a preheating zone (32, 34) for preheating the material, a burning zone (50, 52) for burning the material and a cooling zone (60, 62) for cooling the material,
**characterized in that**
a fuel inlet (20, 22) for admission of fuel into the respective shaft (12, 14) is arranged above or inside the preheating zone (32, 34).

10. Parallel flow - counter flow regenerative shaft kiln (10) according to Claim 9, wherein a multiplicity of lances (40, 42) or slots in the shaft wall for introduction of oxidation gas are arranged inside the burning zone (50, 52).

11. Parallel flow-counter flow regenerative shaft kiln (10) according to Claim 9 or 10, wherein a multiplicity of gas lances (64, 66) for introduction of oxidation gas are arranged inside the burning zone (50, 52), inside the cooling zone (60, 62) and/or inside a gas channel (54) for connection of the shafts (12, 14).

12. Parallel flow-counter flow regenerative shaft kiln (10) according to one of Claims 9 to 11, wherein arranged at the transition between the preheating zone (32, 34) and the burning zone (50, 52) is a flow resistance (86, 88) for generating a volume region without material to be burned.

13. Parallel flow-counter flow regenerative shaft kiln (10) according to one of Claims 9 to 11, wherein an annular space (90, 92) is formed around the transition between the preheating zone (32, 34) and the burning zone (50, 52), and therefore a volume region without material to be burned is formed inside the annular space (90, 92).

14. Parallel flow-counter flow regenerative shaft kiln (10) according to Claim 12 or 13, wherein means are arranged for introducing oxidation gas into the volume region without material to be burned.

15. Parallel flow-counter flow regenerative shaft kiln (10) according to one of Claims 9 to 14, wherein each shaft (12, 14) has a respective gas collection channel (82, 84) which is configured in the form of an annular space, and wherein the gas collection channels (82, 84) of the shafts (12, 14) are connected to one another in terms of gas technology via a gas channel (54).

## Revendications

1. Procédé de combustion et de refroidissement de matières, telles que des roches carbonatées, dans un four à arbre régénératif à flux parallèle et à contre-courant (10) comportant deux arbres (12, 14) fonctionnant alternativement comme arbre de combustion et comme arbre régénératif, dans lequel les matières traversent une zone de préchauffage (32, 34), au moins une zone de combustion (50, 52) et une zone de refroidissement (60, 62) jusqu'à une sortie de matières (24, 26), **caractérisé par le fait que**
le combustible est fourni à l'intérieur ou au-dessus de la zone de préchauffage (32, 34) et, par conséquent, le combustible est chauffé dans la zone de préchauffage (32, 34) avant d'entrer dans la zone de combustion (50, 52).

2. Procédé selon la revendication 1, dans lequel le gaz d'oxydation est introduit dans la zone de combustion (50, 52).

3. Méthode selon l'une des revendications précédentes, dans laquelle le combustible a un pouvoir calorifique inférieur à 6,6 MJ/Nm³, en particulier de 1 MJ/Nm³ à 7 MJ/Nm³, de préférence de 2 MJ/Nm³ à 4 MJ/Nm³, de préférence encore de 3,3 MJ/Nm³.

4. Procédé selon l'une des revendications précédentes, dans lequel le gaz d'oxydation est introduit dans la zone de combustion (50, 52) par une multiplicité de lances (40, 42) ou de fentes dans la paroi de l'arbre.

5. Procédé selon l'une des revendications précédentes, dans lequel, à la transition entre la zone de préchauffage (32, 34) et la zone de combustion (50, 52), se trouve une résistance à l'écoulement (86, 88) pour générer une zone de volume sans matériau à brûler, et le gaz d'oxydation est introduit dans cette zone.

6. Procédé selon l'une des revendications précédentes, dans lequel le gaz d'oxydation est introduit dans un espace annulaire (90, 92) qui est disposé autour de la zone de combustion (50, 52), en particulier autour de la transition entre la zone de préchauffage (32, 34) et la zone de combustion (50, 52).

7. Procédé selon l'une des revendications précédentes, dans lequel un arbre respectif (12, 14) est utilisé comme arbre de combustion (12, 14) pendant la durée d'un cycle de combustion (72), et les étapes suivantes du procédé sont exécutées pendant un cycle de combustion (72) :
a. en fournissant du carburant par l'entrée de carburant (20, 22) dans l'arbre de combustion pendant l'intervalle de temps d'une durée d'alimentation en carburant (74),
b.l' apport d'un gaz inerte par l'entrée de combustible (20, 22) dans l'arbre de combustion pendant un temps de rinçage préliminaire (76),
c. fournir un gaz à faible teneur en oxygène par l'entrée de carburant (20, 22) dans l'arbre de combustion au cours d'une période de rinçage ultérieure (78),
d. l' inversion du fonctionnement du four, dans lequel les fonctions de l'arbre de combustion et de l'arbre de régénération (12, 14) sont inversées.

8. Procédé selon la revendication 7, dans lequel, pendant le temps de rinçage préliminaire (76) et/ou le temps de rinçage ultérieur (78), un gaz d'oxydation est introduit dans l'arbre de combustion (12, 14) par les lances (40, 42) et/ou les fentes dans la paroi de l'arbre.

9. Four à arbre régénérateur à flux parallèle et à contre-courant (10) pour la combustion et le refroidissement de matériaux, tels que des roches carbonatées, comportant deux arbres (12, 14) pouvant être utilisés alternativement comme arbre de combustion et comme arbre de régénération, dans lequel chaque arbre (12, 14) comporte, dans le sens de l'écoulement du matériau, une zone de préchauffage (32, 34) pour préchauffer le matériau, une zone de combustion (50, 52) pour brûler le matériau et une zone de refroidissement (60, 62) pour refroidir le matériau,
**caractérisé par le fait que**
une entrée de carburant (20, 22) pour l'admission de carburant dans l'arbre respectif (12, 14) est disposée au-dessus ou à l'intérieur de la zone de préchauffage (32, 34).

10. Four à arbre régénératif à flux parallèle et à contre-courant (10) selon la revendication 9, dans lequel une multiplicité de lances (40, 42) ou de fentes dans la paroi de l'arbre pour l'introduction du gaz d'oxydation sont disposées à l'intérieur de la zone de combustion (50, 52).

11. Four à arbre régénératif à flux parallèle et à contre-courant (10) selon la revendication 9 ou 10, dans lequel une multiplicité de lances à gaz (64, 66) pour l'introduction de gaz d'oxydation sont disposées à l'intérieur de la zone de combustion (50, 52), à l'intérieur de la zone de refroidissement (60, 62) et/ou à l'intérieur d'un canal à gaz (54) pour la connexion des arbres (12, 14).

12. Four à arbre régénératif à flux parallèle et à contre-courant (10) selon l'une des revendications 9 à 11, dans lequel une résistance à l'écoulement (86, 88) est disposée à la transition entre la zone de préchauffage (32, 34) et la zone de combustion (50, 52) afin de générer une zone de volume sans matière à brûler.

13. Four à arbre régénératif à flux parallèle et à contre-courant (10) selon l'une des revendications 9 à 11, dans lequel un espace annulaire (90, 92) est formé autour de la transition entre la zone de préchauffage (32, 34) et la zone de combustion (50, 52), et donc une région de volume sans matière à brûler est formée à l'intérieur de l'espace annulaire (90, 92).

14. Four à arbre régénératif à flux parallèle et à contre-courant (10) selon la revendication 12 ou 13, dans lequel des moyens sont disposés pour introduire le gaz d'oxydation dans la zone de volume sans matière à brûler.

15. Four à arbre régénératif à flux parallèle et à contre-courant (10) selon l'une des revendications 9 à 14, dans lequel chaque arbre (12, 14) possède un canal de collecte de gaz respectif (82, 84) qui est configuré sous la forme d'un espace annulaire, et dans lequel les canaux de collecte de gaz (82, 84) des arbres (12, 14) sont reliés l'un à l'autre en termes de technologie de gaz par un canal de gaz (54).
